# EUROPÄISCHE PATENTSCHRIFT

(11) **EP 2 203 072 B1**
(45) Veröffentlichungstag und Bekanntmachung des Hinweises auf die Patenterteilung: **24.10.2012**
(21) Anmeldenummer: 09761754.2
(22) Anmeldetag: 10.06.2009
(51) Int. Cl.: A23L 1/16, F26B 15/00, F26B 21/06

(54) **VERFAHREN ZUM TROCKNEN VON TEIGWAREN**
METHOD FOR DRYING PASTA PRODUCTS
PROCÉDÉ DE SÉCHAGE DE PÂTES ALIMENTAIRES

(30) Priorität: 10.06.2008 DE 102008002334
(43) Veröffentlichungstag der Anmeldung: 07.07.2010
(73) Patentinhaber: Bühler AG, 9240 Uzwil (CH)
(72) Erfinder: ZAMPROGNA, Eliana, CH-8400 Winterthur (CH); MÜHLHERR, Christian, 78462 Konstanz (DE); LISNER, Jochen, CH-9532 Rickenbach (CH); KRATZER, Andreas, CH-8044 Zürich (CH)
(74) Vertreter: Hepp Wenger Ryffel AG
(86) Internationale Anmeldenummer: PCT/EP2009/057218
(87) Internationale Veröffentlichungsnummer: WO 2009/150192

(56) Entgegenhaltungen:
- EP-A2- 0 129 892
- WO-A1-02/23108
- WO-A1-03/046454
- WO-A1-03/098139
- CH-A- 303 652
- DE-A1-102005 038 990
- DE-C- 613 604
- VILLENEUVE ET AL: "Drying kinetics of whole durum wheat pasta according to temperature and relative humidity" LEBENSMITTEL WISSENSCHAFT UND TECHNOLOGIE, ACADEMIC PRESS, LONDON, GB LNKD- DOI:10.1016/J.LWT.2006.01.004, Bd. 40, Nr. 3, 1. November 2006 (2006-11-01), Seiten 465-471, XP005732037 ISSN: 0023-6438
- SANNINO A ET AL: "Monitoring the drying process of lasagna pasta through a novel sensing device-based method" JOURNAL OF FOOD ENGINEERING, BARKING, ESSEX, GB LNKD- DOI:10.1016/J.JFOODENG.2004.07.009, Bd. 69, Nr. 1, 1. Juli 2005 (2005-07-01), Seiten 51-59, XP004735546 ISSN: 0260-8774
- XING ET AL: "NMR imaging of continuous and intermittent drying of pasta" JOURNAL OF FOOD ENGINEERING, BARKING, ESSEX, GB, Bd. 78, Nr. 1, 1. Januar 2007 (2007-01-01) , Seiten 61-68, XP005558556 ISSN: 0260-8774

## Beschreibung

Die Erfindung betrifft ein Verfahren sowie eine Vorrichtung zum Trocknen von Teigwaren.

Teigwaren können z.B. durch Mischen und Kneten von Rohmaterialien und Wasser zu einem Rohteig, Umformen des Rohteigs zu Rohteig-Gebilden und anschliessendes Trocknen der Rohteig-Gebilde hergestellt werden.

Beim Trocknen von Teigwaren ist besonders darauf zu achten, dass die Rohteig-Gebilde während des Trocknungsvorgangs keine negativen Beeinträchtigungen wie Rissbildung und/oder zu starke Verfärbungen erfahren.

Ein zu starkes und schnelles Trocknen bei hoher Temperatur, niedriger relativer Luftfeuchtigkeit und starker Luftumwälzung (hohe Trocknungsleistung) verursacht Schwindungsspannungen, die in der Regel zu Verformungen, Rissen oder Sprüngen in den Teigwaren während oder nach deren Trocknung führen. Auf diese Weise getrocknete Teigwaren Zerfallen dann beim Kochen leicht in Einzelstücke.

Darüber hinaus werden durch eine derartig "aggressive" Trocknung Maillard-Reaktionen an den Teigwaren während ihres Trocknens begünstigt, wodurch die erwähnten Verfärbungen entstehen. Ausserdem sind die bisher erzielten Trocknungszeiten bei der Teigwarenherstellung immer noch unbefriedigend lang. Dokument DE 10 2005 038 990 A1 offenbart Verfahren zum Trocknen von Reis und Teigwaren. Dort wurde erkannt, dass die Feuchtig- keit im Produkt ausgeglichen und die viskosen Spannungen abgebaut werden müssen, damit keine Risse entstehen. Unter anderem wird ein Verfahren zum Trocknen von Reis beschrieben, bei dem die Temperatur in den Trocknungsstufen von 90 °C auf 30 °C sinkt. In EP 129 892 A2 werden Verfahren und Vorrichtungen zur Trocknung von langen Teigwaren offenbart. Die Vorrichtungen enthalten Temperatur- und Feuchtesensoren, mit denen Temperatur und Feuchtigkeit des Trocknungsklimas bestimmt werden können. Der Artikel "Drying kinetics of whole durum wheat pasta accord- ing to temperature and relative humidity" von S. Villeneuve et al. (LEBENSMITTEL WISSENSCHAFT UND TECHNOLOGIE, ACADEMIC PRESS, LONDON, Bd. 40, Nr. 3, 1. November 2006, Seiten 465-471, ISSN: 0023-6438) befasst sich mit der Trocknungskinetik von Teigwaren und beschreibt insbesondere theoretische Modelle hierfür. Im Artikel "Monitoring the drying process of lasagna pasta through a novel sensing device-based method" von A. Sannino et al. (JOURNAL OF FOOD ENGINEERING, BARKING, ESSEX, Bd. 69, Nr. 1, 1. Juli 2005, Seiten 51-59, ISSN: 0260-8774) wird unter anderem eine Vorrichtung zur Trocknung von Teigwaren beschrieben, welche Feuchtigkeits- und Temperatursensoren enthält.

Der Erfindung liegt die Aufgabe zugrunde, getrocknete Teigwaren höchster Qualität, insbesondere ohne unerwünschte Verformungen, Risse und zu starke Verfärbungen, in möglichst kurzer Zeit, insbesondere mit markant verkürztem Trocknungsvorgang, herzustellen. Diese Aufgabe wird erfindungsgemäss mit dem Verfahren und der Vorrichtung gemäss den unabhängigen Patentansprüchen gelöst.

Bei dem erfindungsgemässen Verfahren zum Trocknen von Teigwaren durchlaufen die als Rohteig-Gebilde vorliegenden Teigwaren während des Trocknungsvorgangs Zustände an der Oberfläche, die verschiedene Wertepaare aus Temperatur der Oberfläche und Feuchtigkeit der Oberfläche aufweisen. Zumindest ein Teilbereich, vorzugsweise die gesamte Oberfläche der Rohteig-Gebilde bleibt während mindestens eines Teils des Trocknungsvorgangs, vorzugsweise während des gesamten Trocknungsvorgangs in einem viskoelastischen Zustand, bei welchem in einem Diagramm aus Temperatur der Oberfläche des Rohteig-Gebildes und Feuchtigkeit der Oberfläche des Rohteig-Gebildes a) die Temperatur der Oberfläche des Rohteig-Gebildes nicht mehr als 40°C über der Temperatur auf der Glasübergangskurve des Rohteigs im Punkt gleicher Feuchtigkeit der Oberfläche liegt, vorzugsweise nicht mehr als 30°C, besonders bevorzugt nicht mehr als 20°C; und/oder b) die Feuchtigkeit der Oberfläche des Rohteig-Gebildes nicht mehr als 20% über der Feuchtigkeit auf der Glasübergangskurve des Rohteigs im Punkt gleicher Temperatur der Oberfläche liegt, vorzugsweise nicht mehr als 15%, besonders bevorzugt nicht mehr als 10%.

Dadurch lässt sich nicht nur das Ausmass von Schwindungsspannungen und von Maillard-Reaktionen während des Trocknungsvorgangs verringern, so dass die derart hergestellten Trocken-Teigwaren keine Risse und keine Verformungen aufweisen, sondern man erreicht auch eine deutliche Verkürzung der Dauer des Trocknungsvorgangs.

Erfindungsgemäss durchläuft die Oberfläche der Rohteig-Gebilde während des Trocknungsvorgangs Zustände, die verschiedene Temperatur-/Feuchtigkeitswertepaare aufweisen, wobei das Durchlaufen dieser Zustände unter Erhöhung der Temperatur der Oberfläche und Abnahme der Feuchtigkeit der Oberfläche erfolgt.

Die Temperatur / Feuchtigkeits-Zustände der Oberfläche der Rohteig-Gebilde befinden sich demnach immer innerhalb einer definierten Bandbreite oberhalb der Glasübergangskurve.

Als Glasübergangstemperatur wird hier die Temperatur verstanden, bei der ein Material die grösste Änderung der Verformungsfähigkeit aufweist. Unterhalb der Glastemperatur verhält sich das Material spröde und oberhalb viskoelastisch. Die Viskoelastizität ist durch ein teilweise elastisches, teilweise viskoses Verhalten geprägt. Das Material relaxiert nach Entfernen der externen Kraft nur unvollständig, die verbleibende Energie wird in Form von Fließvorgängen (Retardation) abgebaut. Der hier verwendete Begriff Glasübergangstemperatur bezieht sich makroskopisch auf das Rohteig-Gebilde als ganzes und nicht auf einzelne mikroskopische Bestandteile desselben.

Nimmt die Feuchtigkeit, also der Wassergehalt, eines Rohteigs ab, so steigt dessen Glasübergangstemperatur. Wird nun bei einem Rohteig bei verschiedenen Feuchtigkeiten die Glasübergangstemperatur gemessen und diese in einem Temperatur / Feuchtigkeitsdiagramm eingetragen, erhält man für diesen Rohteig eine Glasübergangskurve.

Wenn die Umgebungsluft eines Rohteig-Gebildes eine andere Temperatur und/oder Feuchtigkeit aufweist als der Rohteig, stellt sich auf der Oberfläche des Rohteig-Gebildes eine Gleichgewichtstemperatur und -feuchtigkeit ein. Diese Gleichgewichtstemperatur und -feuchtigkeit der Oberfläche kann derart gesteuert oder geregelt werden, dass die Trocknungszeit minimiert wird. Diese Minimierung wird erreicht, indem möglichst schnell eine geringstmögliche Gleichgewichtsfeuchtigkeit der Teigwarenoberfläche angestrebt wird. Dies geschieht durch die entsprechende Wahl der Trocknungslufttemperatur und/oder -feuchtigkeit unter der Voraussetzung, dass die Oberfläche im viskoelastischen Zustand verbleibt (nicht versprödet).

Vorzugsweise wird für das Verfahren eine Glasübergangskurve im Temperatur/Feuchtigkeits-Diagramm (T/U-Diagramm) des Rohteig-Gebildes bereitgestellt. Die Messung der Glasübergangskurve erfolgt dabei mittels bekannter Messverfahren wie DMTA (dynamic mechanical thermal analysis); auch eine Messung mittels DSC (differential scanning calorimetry) ist möglich. Wichtig dabei ist, dass die Messung an einem homogenen Rohteig erfolgt, damit die Übergangskurve möglichst die Verformungsfähigkeit des gesamten Rohteig-Gebildes wiedergibt und nicht nur einzelner mikroskopischer Bestandteile; daher ist die Messung mittels DMTA bevorzugt.

Vorzugsweise wird beim Trocknen die Gleichgewichtsfeuchtigkeit an der Oberfläche der Rohteig-Gebilde überwacht.

Besonders vorteilhaft ist es, wenn während der Trocknung die Temperatur/Feuchtigkeits-Wertepaare der Oberfläche der Rohteig-Gebilde derart gesteuert oder geregelt werden, dass die Glasübergangskurve in einem Diagramm aus Temperatur der Oberfläche und Feuchtigkeit der Oberfläche nicht in den glasartigen Bereich unterschritten wird.

Besonders vorteilhaft ist es, wenn beim Trocknen (nur) die Gleichgewichtsfeuchtigkeit U an der Oberfläche der Rohteig-Gebilde überwacht wird. Dabei handelt es sich um die Feuchtigkeit an der Oberfläche der Rohteig-Gebilde. Diese Oberflächen-Feuchtigkeit wird den Rohteig-Gebilden durch das sie umgebende Trocknungsklima aufgeprägt und bildet eine der Randbedingungen (Gastemperatur, Wasserdampf-Partialdruck) für den sich während der Trocknung im Innern der Rohteig-Gebilde einstellenden Feuchtigkeits-Gradienten. Die Feuchtigkeiten U werden angegeben als (Masse des Wassers im Produkt) / (Gesamtmasse des wasserhaltigen Produkts).

Das Trocknungsklima ist vorzugsweise eine Luftatmosphäre mit definierter Lufttemperatur und definierter relativer Luftfeuchtigkeit. Bei Bedarf kann auch mit anderen Gasen, insbesondere sauerstofffreien oder sauerstoffarmen Inertgasen, als Trocknungsklima gearbeitet werden. Vorteilhaft sind die Gase Stickstoff oder Kohlendioxid sowie aus diesen bestehende Mischungen mit einem definierten Partialdruck bzw. molarem Anteil an darin enthaltenem Wasserdampf.

Der beim Trocknen der Rohteig-Gebilde auftretende viskoelastische Zustand (Tᵥ;Uᵥ) bei einer Temperatur T und einer Feuchtigkeit U sollte von einem Zustand am Glasübergang (T_{g};U_{g}) der Rohteig-Gebilde einen Minimalabstand ΔUₘᵢₙ = Uᵥ - Ug parallel zur Feuchtigkeits-Achse U (Gew.% Wasser / Gesamtgewicht der Rohteig-Gebilde) des Temperatur/Feuchtigkeits-Diagramms haben.

Während des Trocknens "reitet" man auf der Glasübergangskurve im T/U-Diagramm. Überraschenderweise hat sich gezeigt, dass dadurch kurze Trocknungszeiten mit geringem Energieeinsatz und ohne Beeinträchtigung der eingangs genannten Produkteigenschaften erzielt werden.

Vorzugsweise liegt der Minimalabstand im Bereich 0.5% < ΔUₘᵢₙ < 5%, noch bevorzugter im Bereich 1 % < ΔUₘᵢₙ < 3.5% und am bevorzugtesten im Bereich 1.5% < ΔUₘᵢₙ < 2.5%. Dies gewährleistet im Temperatur/Feuchtigkeits-Diagramm (T/U) einen Sicherheitsabstand zur Glasübergangskurve, deren Übertreten in den Glaszustand zumindest während einer Teilzeitdauer des Trocknungsvorgangs verhindert werden soll. Bei Bedarf und zum richtigen Zeitpunkt während des Trocknens (insbesondere zum Abschluss des Trocknungsvorgangs) kann ggf. ein kontrolliertes und zeitlich begrenztes Übertreten in den Glaszustand ermöglicht werden.

Der beim Trocknen der Rohteig-Gebilde auftretende viskoelastische Zustand (Tᵥ;Uᵥ) bei einer Temperatur T und einer Feuchtigkeit U sollte von einem Zustand am Glasübergang (T_{g};U_{g}) einen Minimalabstand ΔTₘᵢₙ = Tᵥ - T_{g} parallel zur Temperaturachse T (in Grad Kelvin) des Temperatur/Feuchtigkeits-Diagramms haben.

Vorzugsweise liegt der Minimalabstand im Bereich 1K < ΔTₘᵢₙ < 10K und noch bevorzugter im Bereich 1K < ΔTₘᵢₙ < 5K. Auch dies gewährleistet im Temperatur/Feuchtigkeits-Diagramm (T/U) einen Sicherheitsabstand zur Glasübergangskurve, deren Übertreten in den Glaszustand zumindest während einer Teilzeitdauer des Trocknungsvorgangs verhindert werden soll, wobei bei Bedarf und zum richtigen Zeitpunkt während des Trocknens ggf. ein kontrolliertes und zeitlich begrenztes Übertreten in den Glasübergang ermöglicht werden kann.

Der beim Trocknen der Rohteig-Gebilde auftretende viskoelastische (Tᵥ;Uᵥ) bei einer Temperatur T und einer Feuchtigkeit U sollte von einem Zustand am Glasübergang (T_{g}; Ug) einen Maximalabstand ΔU_{max =} Uᵥ - Ug parallel zur Feuchtigkeits-Achse U (Gew.% Wasser / Gesamtgewicht der Rohteig-Gebilde) des Temperatur/Feuchtigkeits-Diagramms nicht überschreiten.

Vorzugsweise liegt der Maximalabstand im Bereich 5% < ΔUₘₐₓ < 20% und noch bevorzugter im Bereich 5% < ΔUₘₐₓ < 10%.

Der beim Trocknen der Rohteig-Gebilde auftretende viskoelastische bzw. gummiartige Zustand (Tᵥ;Uᵥ) bei einer Temperatur T und einer Feuchtigkeit U sollte von einem Zustand am Glasübergang (T_{g};U_{g}) einen Maximalabstand ΔT_{Max} = Tᵥ - Tg parallel zur Temperatur-Achse T (in Grad Kelvin) des Temperatur / Feuchtigkeits-Diagramms nicht überschreiten.

Vorzugsweise liegt der Maximalabstand im Bereich 10K < ΔTₘₐₓ < 40K und noch bevorzugter im Bereich 10K < ΔTₘₐₓ < 30K.

Vorzugsweise wird die Glasübergangskurve im Temperatur / Feuchtigkeits-Diagramm (T/U-Diagramm) des vorliegenden Rohteig-Materials durch Messungen an Proben des Rohteigs vor und/oder während des Trocknens bereitgestellt. Die hierfür nötigen Probennahmen und Messungen können online oder offline durchgeführt werden. Dabei werden an den Proben Feuchtigkeiten und/oder Temperaturen bestimmt, bei denen es sich um die homogene Feuchtigkeit bzw. homogene Temperatur im gesamten Volumen der entnommenen Probe handelt, nachdem sich die zum Zeitpunkt der Probenentnahmen vorhandenen Feuchtigkeits- und Temperaturgradienten innerhalb der Probe abgebaut haben.

Alternativ oder komplementär kann die benötigte Glasübergangskurve im Temperatur / Feuchtigkeits-Diagramm (T/U-Diagramm) des vorliegenden Rohteig-Materials aus einer Bibliothek bereitgestellt werden, in der Glasübergangs-Daten und Rohteig-Rezeptdaten bereitgestellt sind.

Die Bestimmung der Glasübergänge in den Proben kann durch dem Fachmann geläufige DSC-Messungen oder DMTA-Messungen erfolgen.

Vorzugsweise wird während mindestens eines Teils des Trocknungsvorgangs die relative Feuchtigkeit und/oder die Temperatur der Trocknungsumgebung der Rohteig-Gebilde derart gesteuert oder geregelt, dass zumindest in Teilbereichen der Oberfläche der Rohteig-Gebilde eine Glasumwandlung vom viskoelastischen Zustand in den glasartigen Zustand verhindert wird. In den Bereichen, in denen die zu trocknenden Rohteig-Gebilde nicht im glasartigen Zustand vorliegen, können Wassermoleküle schneller (ca. 5 bis 10 mal schneller) diffundieren, so dass das Abführen von Wasser und somit das Trocknen der Gebilde insgesamt schneller erfolgt. Idealerweise wird dabei der Übertritt in den Glasbereich durch Steuerung der relativen Feuchtigkeit des Trocknungsklimas bei jeder Temperatur während des Trocknungsvorgangs verhindert.

Besonders vorteilhaft ist es, wenn bei den Rohteig-Gebilden ein Übertritt in den Glasbereich durch Steuerung der relativen Feuchtigkeit und/oder der Temperatur des Trocknungsklimas während des gesamten Trocknungsvorgangs verhindert wird. Vorzugsweise wird dies während mindestens 90% und noch bevorzugter während mindestens 95% der gesamten Zeitdauer des Trocknungsvorgangs verhindert. Dies sollte bei mindestens 80% der Gesamtoberfläche der Rohteig-Gebilde der Fall sein. Besonders vorteilhaft ist es, wenn die nicht im glasartigen Zustand vorliegende Teiloberfläche mindestens 90% und noch bevorzugter mindestens 95% der Gesamtoberfläche der Rohteig-Gebilde beträgt.

Zweckmässigerweise wird die relative Feuchtigkeit des Trocknungsklimas unter 98%, bevorzugt 95%, bevorzugter 92% und am bevorzugtesten unter 89% gehalten. Dadurch wird die Gefahr von Kondensationseffekten verringert, welche zu unerwünschten Verklebungen der Rohteig-Gebilde während des Trocknungsvorganges führen können. Zudem wird dadurch unter anderem die Trocknungskinetik positiv beeinflusst.

Zweckmässigerweise befindet sich beim Trocknen ein Grossteil des Volumens, vorzugsweise das gesamte Volumen, oder zumindest die gesamte Oberfläche der Rohteig-Gebilde in einem viskoelastischen Zustand jenseits des Glasübergangs des Rohteig-Materials. Besonders bevorzugt ist es dabei, wenn während der gesamten Zeitdauer des Trocknungsvorgangs die Rohteig-Gebilde einen viskoelastischen Zustand jenseits des Glasübergangs aufweisen. Vorzugsweise sollte nur am Ende des Trocknungsvorgangs beim raschen Abkühlen der getrockneten Rohteig-Gebilde auf Umgebungstemperatur der Glasübergang zum glasartigen Zustand hin unterschritten werden.

Zweckmässigerweise wird die Temperatur T während des Trocknens unter 150°C und vorzugsweise unter 120°C gehalten. Dadurch werden Maillard-Reaktionen in den Rohteig-Gebilden und somit zu starke Verfärbungen während des Trocknens verhindert.

Zweckmässigerweise wird die Gesamtdauer tₜₒₜ des Trocknens unter 280 min, bevorzugter unter 240 min, noch bevorzugter unter 200 min und vorzugsweise unter 180 min gehalten. Selbst bei einer Gesamtdauer tₜₒₜ unter 160 min sind gute Resultate möglich. Dies reicht bei dem erfindungsgemässen Verfahren für eine vollständige Trocknung von einem Anfangs-Feuchtegehalt nach der Extrusion bis auf einen End-Feuchtegehait nach der Trocknung und ermöglicht ein energiesparendes Trocknen.

Bei einer besonders vorteilhaften Ausführung des erfindungsgemässen Verfahrens ist das Zeit-Integral des zeitlichen Temperaturverlaufs T(t) (in °C) über die Trocknungs-Gesamtdauder tₜₒₜ kleiner als 20 x 10³ min °C und vorzugsweise kleiner als 15 x 10³ min °C. Auch dies trägt zur Verhinderung trocknungsbedingter Verfärbungen bei und ermöglicht es, den Trocknungs-Energieaufwand gering zu halten und dennoch ein Unterschreiten des Glasübergangs in den glasartigen Zustand während des Trocknens zu vermeiden.

Wenn der Zustand der Oberfläche der Rohteig-Gebilde kurzzeitig (einige Sekunden bis einige Minuten) den Glasübergang in den glasartigen Zustand unterschreitet, ist dies umso unbedenklicher je früher im Trocknungsvorgang dies stattfindet. Insbesondere ist ein kurzzeitiges Unterschreiten des Glasübergangs während des Transfers der frisch geformten Rohteig-Gebilde zur Trocknungsstufe unbedenklich.

Die Rohteig-Gebilde können während des Trocknungsvorgangs relativ zueinander bewegt werden und/oder relativ zueinander beabstandet gehalten werden. Dadurch werden Verklebungen der Rohteig-Gebilde untereinander verhindert.

Bei den Rohteig-Gebilden kann es sich um Langwaren (z.B. Spaghetti), um Kurzwaren (z.B. Spiralen) oder um Spezialformate (z.B. Nidi) handeln.

Vorzugsweise sind die Langwaren während des Trocknungsvorgangs auf Stäben beabstandet voneinander aufgehängt, wobei die aufgehängten Langwaren während des Trocknungsvorgangs leicht in phasenversetzte Pendelbewegungen mit ihrem Aufhängungspunkt als Drehpunkt versetzt werden.

Vorzugsweise werden die Kurzwaren während des Trocknungsvorgangs mittels eines vibrierenden Bodens bewegt und/oder mittels einer Gasströmung fluidisiert.

Idealerweise bleiben bei der Erfindung sowohl die Oberfläche als auch das Innere der Teigwaren bis zum Mittelpunkt während des gesamten Trocknungsvorgangs, also während der sog. Vortrocknung, Haupttrocknung und Stabilisierung, in einem viskoeslastischen, d.h. nicht glasartigen Zustand. Dies führt dazu, dass der Feuchtigkeitstransport vom Innern bzw. vom Mittelpunkt der Teigwaren zu deren Oberfläche sowie von deren Oberfläche in die umgebende Trocknungsluft rasch erfolgt. Man erreicht somit eine höhere Trocknungsgeschwindigkeit bzw. eine schnellere Trocknungs-Sättigung. Da kein Glasübergang stattfindet, besteht keine Gefahr der Rissbildung in den Teigwaren.

Die Oberfläche und das Innere bzw. der Mittelpunkt der Teigwaren erreichen beim Trocknen den Feuchtigkeitsgehalt im Gleichgewicht mit der umgebenden Luft. Somit erübrigt sich auch eine Befeuchtung im Stabilisierungsschritt.

Die eingangs genannte Aufgabe wird ferner mit einer Vorrichtung mit den Merkmalen des unabhängigen Vorrichtungsanspruchs gelöst.

Eine erfindungsgemässe Vorrichtung zum Trocknen von Teigwaren gemäss einem vorstehend beschriebenen Verfahren umfasst wenigstens einen Temperatur-Sensor und wenigstens einen Feuchtigkeits-Sensor zum Bestimmen der Temperatur und der Feuchtigkeit des Trocknungsklimas.

Erfindungsgemäss ist dem wenigstens einen Temperatur-Sensor und Feuchtigkeits-Sensor eine Steuerungseinheit oder Regelungseinheit zugeordnet, die derart programmiert oder programmierbar ist, dass das Trocknen von Teigwaren gemäss dem vorstehend beschriebenen Verfahren ermöglicht ist. Mit der Steuerungseinheit oder der Regelungseinheit kann eine Bibliothek verbunden oder verbindbar sein, in der Glasübergangs-Daten und Rohteig-Daten, insbesondere Glasübergangs-Daten von Rohteigen bereitgestellt sind.

Ein weiterer, nicht erfindungsgemässer Aspekt betrifft ein Verfahren zum Betreiben einer Vorrichtung wie vorstehend beschrieben, wobei die Vorrichtung derart gesteuert oder geregelt wird, dass bei bestimmungsgemässem Gebrauch der Vorrichtung zur Trocknung von Rohteig-Gebilden mit einer maximalen Dicke von < 2 mm und/oder einer maximalen Wandstärke von < 1,75 mm eine Gesamtdauer tₜₒₜ des Trocknungsvorgangs von unter 280 min, vorzugsweise unter 200 min, besonders bevorzugt unter 160 min resultiert.

Tabelle 1 zeigt Trocknungsbedingungen, die in einer erfindungsgemässen Trocknungsanlage appliziert werden können.

**Tabelle 1:**

| Zustand der Oberfläche der Rohteig-Gebilde | T [°C]¹ | RF [%]¹ | t [min] | Zustand in T/U Diagramm gemäss Fig. 1 und 2 |
|---|---|---|---|---|
| viskoelastisch | 50 | 88 | 8 | A |
| viskoelastisch | 55 | 86 | 8 | Übergang A->B |
| viskoelastisch | 60 | 84.5 | 8 | Übergang A->B |
| viskoelastisch | 65 | 83 | 8 | Übergang A->B |
| viskoelastisch | 70 | 82 | 8 | Übergang A->B |
| viskoelastisch | 75 | 80 | 8 | Übergang A->B |
| viskoelastisch | 80 | 77 | 8 | Übergang A->B |
| viskoelastisch | 90 | 71 | 8 | Überqanq A->B |
| viskoelastisch | 95 | 66 | 8 | Übergang A->B |
| viskoelastisch | 97 | 63 | 35 | B |
| viskoelastisch | 90 | 80 | 45 | C |

| | | | | |
|---|---|---|---|---|
| ¹ bezogen auf die konditionierte Luft vor Durchströmen des Produktraumes | | | | |

Die in diesem Beispiel angeführten Teigwaren wurden aus handelsüblichem Hartweizengriess bei einem Wassergehalt von 31g / 100g Gesamtgewicht in einer dafür geeigneten Teigwaren-Extrusionsanlage zum Format von Spaghetti unter Verwendung einer Teigwarenform (Lochdurchmesser 1,75 mm) hergestellt. Die verpressten und auf Stangen gehängten Teigwaren wurden in die Trocknungsanlage überführt, in welcher mittels konvektiver Trocknung mit konditionierter Luft die Trocknung bewerkstelligt wurde. Die Bedingungen dieser Trocknungsluft (Temperatur T und relative Luftfeuchtigkeit RF) wurden über die Gesamttrocknungsdauer von 152 min gemäss den in der Tabelle angegebenen Sollwerten appliziert. Die Gesamttrocknungsdauer ist die Summe der Verweilzeiten t (siehe 3. Spalte der Tabelle) bei einem jeweiligen Klima (T/RF-Kombination, siehe Spalte 1 und Spalte 2 der Tabelle).

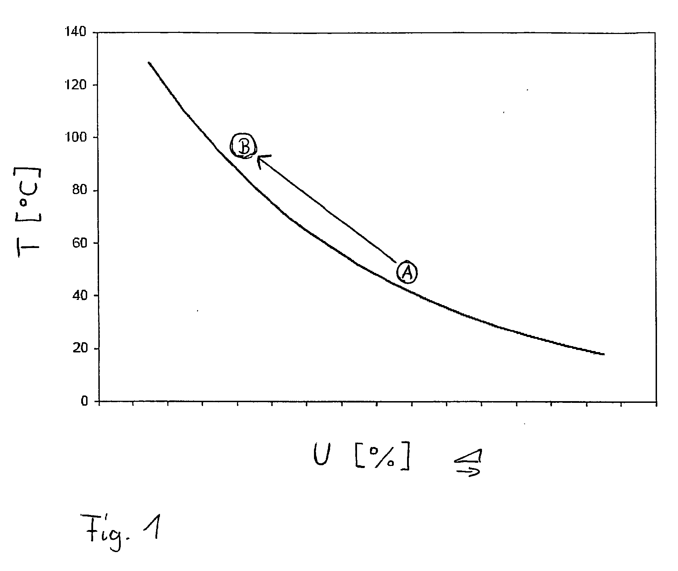

In Figur 1 ist eine Glasübergangskurve in einem Temperatur /Feuchtigkeitsdiagramm exemplarisch dargestellt. Aufgetragen ist die Temperatur T der Oberfläche des Rohteig-Gebildes gegen die Gleichgewichtsfeuchtigkeit U der Oberfläche des Rohteig-Gebildes, angegeben in Gewichtsprozent bezogen auf das Gesamtgewicht des Rohteig-Gebildes. Mit zunehmender Feuchtigkeit nimmt die Glasübergangstemperatur ab. Beim erfindungsgemässen Verfahren werden Rohteig-Gebilde mit einer Oberfläche im Temperatur /Feuchtigkeitszustand A in die erste Behandlungszone gebracht. In dieser Zone werden die Rohteig-Gebilde schrittweise in den Temperatur / Feuchtigkeitszustand B gebracht. Dabei wird durch Anpassen der Temperatur und Feuchtigkeit das Trocknungsklimas die Gleichgewichtsfeuchtigkeit der Oberfläche der Rohteig-Gebilde oberhalb der Glasübergangskurve gehalten. Im der zweiten Behandlungszone wird die Oberfläche der Rohteig-Gebilde über längere Zeit im Temperatur / Feuchtigkeitszustand B gehalten. Weil die Oberfläche im viskoelastischen Zustand verbleibt, kann die in den Rohteig-Gebilden enthaltene Feuchtigkeit besonders gut an die Oberfläche diffundieren und durch diese hindurchtreten.

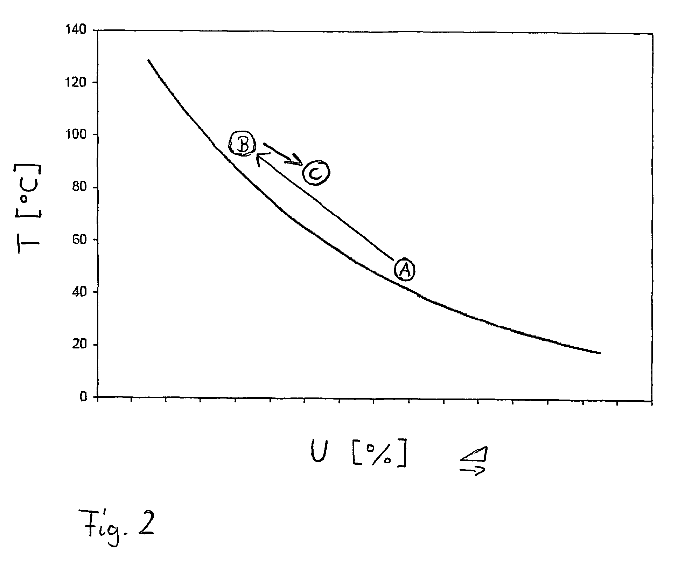

In Figur 2 ist gegenüber Figur 1 zusätzlich ein abschliessender Schritt der Stabilisation der Rohteig-Gebilde gezeigt, bei welchem die Oberfläche der Rohteig-Gebilde über längere Zeit im Temperatur / Feuchtigkeitszustand C gehalten wird. Dies dient der Vereinheitlichung der Feuchtigkeit über die gesamte Dicke des Rohteig-Gebildes.

## Patentansprüche

1. Verfahren zum Trocknen von Teigwaren, bei welchem die als Rohteig-Gebilde vorliegenden Teigwaren während des Trocknungsvorgangs Zustände an der Oberfläche durchlaufen, die verschiedene Wertepaare aus Temperatur (T) der Oberfläche und Feuchtigkeit (U) der Oberfläche aufweisen, und wobei zumindest ein Teilbereich, vorzugsweise die gesamte Oberfläche der Rohteig-Gebilde während mindestens eines Teils des Trocknungsvorgangs, vorzugsweise während des gesamten Trocknungsvorgangs in einem viskoelastischen Zustand bleibt, bei welchem in einem Diagramm aus Temperatur (T) der Oberfläche des Rohteig-Gebildes und Feuchtigkeit (U) der Oberfläche des Rohteig-Gebildes
a) die Temperatur (Tᵥ) der Oberfläche des Rohteig-Gebildes nicht mehr als 40°C über der Temperatur (Tg) auf der Glasübergangskurve, des Rohteigs im Punkt gleicher Feuchtigkeit der Oberfläche liegt, vorzugsweise nicht mehr als 30°C, besonders bevorzugt nicht mehr als 20°C;
und/oder
b) die Feuchtigkeit (Uᵥ) der Oberfläche des Rohteig-Gebildes nicht mehr als 20% über der Feuchtigkeit auf der Glasübergangskurve des Rohteigs im Punkt gleicher Temperatur der Oberfläche liegt, vorzugsweise nicht mehr als 15%, besonders bevorzugt nicht mehr als 10%
wobei die Oberfläche der Rohteig-Gebilde während des Trocknungsvorgangs Zustände durchläuft, die verschiedene Temperatur-/ Feuchtigkeitswertepaare (T; U) aufweisen, wobei das Durchlaufen dieser Zustände unter Erhöhung der Temperatur der Oberfläche und Abnahme der Feuchtigkeit der Oberfläche erfolgt.

2. Verfahren nach Anspruch 1, **dadurch gekennzeichnet, dass** die Temperatur und Feuchtigkeit der Oberfläche der Rohteig-Gebilde während des Trocknungsvorgangs derart gesteuert oder geregelt werden, dass der Zeitbedarf des gesamten Trocknungsvorgangs minimiert wird.

3. Verfahren nach einem der Ansprüche 1 bis 2, **dadurch gekennzeichnet, dass** zur Steuerung oder Regelung des Verfahrens eine Glasübergangskurve in einem Diagramm aus Temperatur (T) und Feuchtigkeit (U) der Oberfläche des Rohteig-Gebildes verwendet wird.

4. Verfahren nach einem der Ansprüche 1 bis 3, **dadurch gekennzeichnet, dass** beim Trocknungsvorgang der Rohteig-Gebilde durchlaufene viskoelastische Zustände, bei welchen die Rohteiggebilde Temperaturen (Tᵥ) der Oberfläche und Feuchtigkeiten (Uᵥ) der Oberfläche aufweisen, von Zuständen am Glasübergang mit Glasübergangstemperaturen (Tg) und Glasübergangsfeuchtigkeiten (Ug) Minimalabstände ΔUₘᵢₙ = Uᵥ - Ug parallel zur Feuchtigkeits-Achse U aufweisen in einem Diagramm aus Temperatur (T) und Feuchtigkeit (U) der Oberfläche der Rohteig-Gebilde, wobei für ΔUₘᵢₙ gilt: 0.5% < ΔUₘᵢₙ < 5%.

5. Verfahren nach einem der Ansprüche 1 bis 4, **dadurch gekennzeichnet, dass** beim Trocknungsvorgang der Rohteig-Gebilde durchlaufene viskoelastische Zustände, bei welchen die Rohteiggebilde Temperaturen (Tᵥ) der Oberfläche und Feuchtigkeiten (Uᵥ) der Oberfläche aufweisen, von Zuständen am Glasübergang mit Glasübergangstemperaturen (Tg) und Glasübergangsfeuchtigkeiten (Ug) Minimalabstände ΔTₘᵢₙ = Tᵥ - Tg parallel zur Temperatur-Achse aufweisen in einem Diagramm aus Temperatur (T) und Feuchtigkeit (U) der Oberfläche der Rohteig-Gebilde, wobei für ΔTₘᵢₙ gilt: 1K < ΔTₘᵢₙ < 10K.

6. Verfahren nach wenigstens einem der Ansprüche 1 bis 5, **dadurch gekennzeichnet, dass** beim Trocknungsvorgang der Rohteig-Gebilde durchlaufene viskoelastische Zustände, bei welchen die Rohteiggebilde Temperaturen (Tᵥ) der Oberfläche und Feuchtigkeiten (Uᵥ) der Oberfläche aufweisen, von Zuständen am Glasübergang mit Glasübergangstemperaturen (T_{g}) und Glasübergangsfeuchtigkeiten (Ug) Maximalabstände ΔUₘₐₓ = Uᵥ - Ug parallel zur Feuchtigkeits-Achse U aufweisen in einem Diagramm aus Temperatur (T) und Feuchtigkeit (U) der Oberfläche der Rohteig-Gebilde, wobei für ΔUₘₐₓ gilt: 5% < ΔUₘₐₓ < 20%.

7. Verfahren nach einem der Ansprüche 1 bis 6, **dadurch gekennzeichnet, dass** beim Trocknungsvorgang der Rohteig-Gebilde durchlaufene viskoelastische Zustände, bei welchen die Rohteiggebilde Temperaturen (Tᵥ) der Oberfläche und Feuchtigkeiten (Uᵥ) der Oberfläche aufweisen, von Zuständen am Glasübergang mit Glasübergangstemperaturen (Tg) und Glasübergangsfeuchtigkeiten (U_{g}) Maximalabstände ΔTₘₐₓ = Tᵥ - Tg parallel zur Temperatur-Achse aufweisen in einem Diagramm aus Temperatur (T) und Feuchtigkeit (U) der Oberfläche der Rohteig-Gebilde, wobei für ΔTₘₐₓ gilt: 10K < ΔTₘₐₓ < 40K.

8. Verfahren nach einem der Ansprüche 1 bis 7, **dadurch gekennzeichnet, dass** das Zeit-Integral des Verlaufs der Temperatur T(t) in °C über die Trocknungs-Gesamtdauer tₜₒₜ kleiner als 20 x 10³ min °C ist.

9. Verfahren nach Anspruch 8, **dadurch gekennzeichnet, dass** das Zeit-Integral des Verlaufs der Temperatur T(t) in °C über die Trocknungs-Gesamtdauer tₜₒₜ kleiner als 15 x 10³ min °C ist.

10. Verfahren nach einem der Ansprüche 1 bis 9, **dadurch gekennzeichnet, dass** während mindestens eines Teils, vorzugsweise während des gesamten Trocknungsvorgangs die relative Feuchtigkeit der Trocknungsumgebung und/oder die Temperatur der Trocknungsumgebung der Rohteig-Gebilde derart gesteuert oder geregelt werden, dass zumindest ein Teilbereich der Oberfläche, vorzugsweise die gesamte Oberfläche der Rohteig-Gebilde nicht versprödet, sondern in einem viskoelastischen Zustand verbleibt.

11. Vorrichtung zum Trocknen von Teigwaren umfassend wenigstens einen Temperatur-Sensor und wenigstens einen Feuchtigkeits-Sensor zum Bestimmen der Temperatur und der Feuchtigkeit des Trocknungsklimas, **dadurch gekennzeichnet, dass** dem wenigstens einen Temperatur-Sensor und Feuchtigkeits-Sensor eine Steuerungseinheit oder Regelungseinheit zugeordnet ist, die derart programmiert ist, dass das Trocknen von Teigwaren gemäss einem Verfahren nach einem der Ansprüche 1 bis 10 ermöglicht ist.

## Claims

1. Method for drying pasta products, in which the pasta products which are present as raw pasta shapes pass during the drying process through surface states that have different pairs of values of surface temperature (T) and surface moisture (U), and wherein at least a subregion, preferably the entire surface, of the raw pasta shapes for at least some of the drying process, preferably for the entire drying process, remains in a viscoelastic state in which in a diagram of surface temperature (T) of the raw pasta shape and surface moisture (U) of the raw pasta shape,
a) the surface temperature (Tᵥ) of the raw pasta shape is no more than 40°C above the temperature (Tg) on the glass transition curve of the raw pasta at the point of equal surface moisture, preferably no more than 30°C, particularly preferably no more than 20°C;
and/or
b) the surface moisture (Uᵥ) of the raw pasta shape is no more than 20% above the moisture on the glass transition curve of the raw pasta at the point of equal surface temperature, preferably no more than 15%, particularly preferably no more than 10%,
wherein the surface of the raw pasta shapes during the drying process runs through states that have different pairs of temperature/moisture values (T; U), wherein passing through these states takes place with an increase of the surface temperature and a decrease of the surface moisture.

2. Method according to Claim 1, **characterized in that** the surface temperature and moisture of the raw pasta shapes are controlled in an open-loop or closed-loop manner during the drying process in such a manner that the time required for the total drying process is minimized.

3. Method according to either of Claims 1 and 2, **characterized in that**, for the open-loop or closed-loop control of the method, a glass transition curve in a diagram of surface temperature (T) and surface moisture (U) of the raw pasta shape is used.

4. Method according to any one of Claims 1 to 3, **characterized in that** viscoelastic states through which the raw pasta shapes pass during the drying process in which the raw pasta shapes have surface temperatures (Tᵥ) and surface moistures (Uᵥ) have minimum distances ΔUₘᵢₙ = Uᵥ - Ug from states at the glass transition having glass transition temperatures (T_{g}) and glass transition moistures (Ug) in parallel to the moisture axis U in a diagram of surface temperature (T) and surface moisture (U) of the raw pasta shapes, wherein for ΔUₘᵢₙ: 0.5% < ΔUₘᵢₙ < 5%.

5. Method according to any one of Claims 1 to 4, **characterized in that** viscoelastic states through which the raw pasta shapes pass during the drying process in which the raw pasta shapes have surface temperatures (Tᵥ) and surface moistures (Uᵥ) have minimum distances ΔTₘᵢₙ = Tᵥ - Tg from states at the glass transition having glass transition temperatures (T_{g}) and glass transition moistures (Ug) in parallel to the temperature axis in a diagram of surface temperature (T) and surface moisture (U) of the raw pasta shapes, wherein, for ΔTₘᵢₙ : 1K < ΔTₘᵢₙ < 10K.

6. Method according to at least one of Claims 1 to 5, **characterized in that** viscoelastic states through which the raw pasta shapes pass during the drying process in which the raw pasta shapes have surface temperatures (Tᵥ) and surface moistures (Uᵥ) have maximum distances ΔUₘₐₓ = Uᵥ - Ug from states at the glass transition having glass transition temperatures (Tg) and glass transition moistures (Ug) in parallel to the moisture axis U in a diagram of surface temperature (T) and surface moisture (U) of the raw pasta shapes, wherein for ΔUₘₐₓ: 5% < ΔUₘₐₓ < 20%.

7. Method according to any one of Claims 1 to 6, **characterized in that** viscoelastic states through which the raw pasta shapes pass during the drying process in which the raw pasta shapes have surface temperatures (Tᵥ) and surface moistures (Uᵥ) have maximum distances ΔTₘₐₓ = Tᵥ - T_{g} from states at the glass transition having glass transition temperatures (Tg) and glass transition moistures (Ug) in parallel to the temperature axis in a diagram of surface temperature (T) and surface moisture (U) of the raw pasta shapes, wherein, for ΔTₘₐₓ: 10K < ΔTₘₐₓ < 40K.

8. Method according to any one of Claims 1 to 7, **characterized in that** the time integral of the course of the temperature T(t) in °C over the total drying time tₜₒₜ is less than 20 x 10³ min °C.

9. Method according to Claim 8, **characterized in that** the time integral of the course of the temperature T(t) in °C over the total drying time tₜₒₜ is less than 15 x 10³ min °C.

10. Method according to any one of Claims 1 to 9, **characterized in that** during at least a part, preferably during the entire drying process, the relative humidity of the drying environment and/or the temperature of the drying environment of the raw pasta shapes is/are controlled in an open-loop or closed-loop manner in such a manner that at least a subregion of the surface, preferably the entire surface, of the raw pasta shapes does not become brittle, but remains in a viscoelastic state.

11. Device for drying pasta products, comprising at least one temperature sensor and at least one moisture sensor for determining the temperature and moisture of the drying climate, **characterized in that** an open-loop control unit or closed-loop control unit is assigned to the at least one temperature sensor and moisture sensor, which control unit is programmed in such a manner that the drying of pasta products according to a method according to any one of Claims 1 to 10 is made possible.

## Revendications

1. Procédé pour le séchage de pâtes alimentaires, dans lequel les pâtes alimentaires se trouvant sous forme de produit-pâte crue passent au cours du processus de séchage par des états à la surface qui présentent différentes paires de valeurs de température (T) de la surface et humidité (U) de la surface, et au moins une zone partielle, de préférence la surface totale des produits-pâte crue, reste pendant au moins une partie du processus de séchage, de préférence pendant tout le processus de séchage, en un état viscoélastique, dans lequel dans un diagramme de température (T) de la surface du produit-pâte crue et humidité (U) de la surface du produit-pâte crue,
a) la température (Tᵥ) de la surface du produit-pâte crue n'excède pas de plus de 40 °C, de préférence pas de plus de 30 °C, de façon particulièrement préférée pas de plus de 20 °C, la température (Tg) sur la courbe de transition vitreuse de la pâte crue au point de même humidité de la surface ;
et/ou
b) l'humidité (Uᵥ) de la surface du produit-pâte crue n'excède pas de plus de 20 %, de préférence pas de plus de 15 %, de façon particulièrement préférée pas de plus de 10 %, l'humidité sur la courbe de transition vitreuse de la pâte crue au point de même température de la surface,
la surface du produit-pâte crue passant au cours du processus de séchage par des états qui présentent différentes paires de valeurs de température/humidité (T ; U), la traversée de ces états s'effectuant avec élévation de la température de la surface et diminution de l'humidité de la surface.

2. Procédé selon la revendication 1, **caractérisé en ce qu'**au cours du processus de séchage on contrôle ou règle la température et l'humidité de la surface des produits-pâte crue de manière à réduire au minimum le temps requis par le processus de séchage dans son ensemble.

3. Procédé selon la revendication 1 ou 2, **caractérisé en ce que** pour la commande ou la régulation du procédé on utilise une courbe de transition vitreuse dans un diagramme de température (T) et d'humidité (U) de la surface du produit-pâte crue.

4. Procédé selon l'une quelconque des revendications 1 à 3, **caractérisé en ce que** des états viscoélastiques traversés lors du processus de séchage des produits-pâte crue, dans lesquels les produits-pâte crue présentent des températures (Tᵥ) de la surface et des humidités (Uᵥ) de la surface, présentent parallèlement à l'axe d'humidité U des écarts minimaux d'états à la transition vitreuse avec des températures de transition vitreuse (Tg) et des humidités de transition vitreuse (Ug) ΔUₘᵢₙ = Uᵥ - Ug dans un diagramme de température (T) et d'humidité (U) de la surface des produits-pâte crue, la relation suivante s'appliquant pour ΔUₘᵢₙ : 0,5 % < ΔUₘᵢₙ < 5 %.

5. Procédé selon l'une quelconque des revendications 1 à 4, **caractérisé en ce que** des états viscoélastiques traversés lors du processus de séchage des produits-pâte crue, dans lesquels les produits-pâte crue présentent des températures (Tᵥ) de la surface et des humidités (Uᵥ) de la surface, présentent parallèlement à l'axe de température des écarts minimaux d'états à la transition vitreuse avec des températures de transition vitreuse (Tg) et des humidités de transition vitreuse (Ug) ΔTₘᵢₙ = Tᵥ - Tg dans un diagramme de température (T) et d'humidité (U) de la surface des produits-pâte crue, la relation suivante s'appliquant pour ΔTₘᵢₙ : 1 K < ΔTₘiₙ < 10 K.

6. Procédé selon au moins l'une quelconque des revendications 1 à 5, **caractérisé en ce que** des états viscoélastiques traversés lors du processus de séchage des produits-pâte crue, dans lesquels les produits-pâte crue présentent des températures (Tᵥ) de la surface et des humidités (Uᵥ) de la surface, présentent parallèlement à l'axe d'humidité U des écarts maximaux d'états à la transition vitreuse avec des températures de transition vitreuse (Tg) et des humidités de transition vitreuse (Ug) ΔUₘₐₓ = Uᵥ - Ug dans un diagramme de température (T) et d'humidité (U) de la surface des produits-pâte crue, la relation suivante s'appliquant pour ΔUₘₐₓ : 5 % < ΔUₘₐₓ < 20 %.

7. Procédé selon l'une quelconque des revendications 1 à 6, **caractérisé en ce que** des états viscoélastiques traversés lors du processus de séchage des produits-pâte crue, dans lesquels les produits-pâte crue présentent des températures (Tᵥ) de la surface et des humidités (Uᵥ) de la surface, présentent parallèlement à l'axe de température des écarts maximaux d'états à la transition vitreuse avec des températures de transition vitreuse (Tg) et des humidités de transition vitreuse (Ug) ΔTₘₐₓ = Tᵥ - Tg dans un diagramme de température (T) et d'humidité (U) de la surface des produits-pâte crue, la relation suivante s'appliquant pour ΔTₘₐₓ : = 10 K < ΔTₘₐₓ < 40 K.

8. Procédé selon l'une quelconque des revendications 1 à 7, **caractérisé en ce que** l'intégrale temporelle du profil de la température T(t) en °C sur toute la durée du séchage tₜₒₜ est inférieure à 20 x 10³ min °C.

9. Procédé selon la revendication 8, **caractérisé en ce que** l'intégrale temporelle du profil de la température T(t) en °C sur toute la durée du séchage tₜₒₜ est inférieure à 15 x 10³ min °C.

10. Procédé selon l'une quelconque des revendications 1 à 9, **caractérisé en ce que** pendant au moins une partie, de préférence pendant la totalité du processus de séchage on règle ou contrôle l'humidité relative de l'environnement de séchage et/ou la température de l'environnement de séchage des produits-pâte crue de manière qu'au moins une zone partielle de la surface, de préférence la totalité de la surface des produits-pâte crue ne devienne pas friable, mais au contraire reste en un état viscoélastique.

11. Dispositif pour le séchage de pâtes alimentaires, comprenant au moins un capteur de température et au moins un capteur d'humidité pour la détermination de la température et de l'humidité du climat de séchage, **caractérisé en ce qu'**au dit au moins un capteur de température et capteur d'humidité est affectée une unité de commande ou unité de régulation, qui est programmée de manière à permettre le séchage de pâtes alimentaires conformément à un procédé selon l'une quelconque des revendications 1 à 10.
